# EUROPÄISCHE PATENTSCHRIFT

(11) **EP 3 545 735 B1**
(45) Veröffentlichungstag und Bekanntmachung des Hinweises auf die Patenterteilung: **25.10.2023**
(21) Anmeldenummer: 19154473.3
(22) Anmeldetag: 30.01.2019
(51) Int. Cl.: A01B 33/02, A01B 49/02, A01B 33/12, A01B 35/18, A01B 29/04, A01B 63/00

(54) **VORRICHTUNG UND VERFAHREN ZUR BODENBEARBEITUNG**
DEVICE AND METHOD FOR SOIL WORKING
DISPOSITIF ET PROCÉDÉ DE TRAVAIL DU SOL

(30) Priorität: 29.03.2018 DE 102018204873
(43) Veröffentlichungstag der Anmeldung: 02.10.2019
(73) Patentinhaber: Edlbauer, Roland, 4707 Schlüsslberg (AT); Götzenberger, Albert, 4074 Stroheim (AT)
(72) Erfinder: Edlbauer, Roland, 4707 Schlüsslberg (AT); Götzenberger, Albert, 4074 Stroheim (AT)
(74) Vertreter: Schlotter, Alexander Carolus Paul

(56) Entgegenhaltungen:
- DE-A1- 2 212 940
- FR-A- 389 023
- US-A- 198 601
- US-A1- 2003 145 716

## Beschreibung

Die vorliegende Erfindung betrifft eine Vorrichtung und ein Verfahren zur Bodenbearbeitung.

Aus der DE 22 12 940 A1 ist eine Bodenbearbeitungsmaschine mit mehreren im Gestell gelagerten, um eine wenigstens nahezu horizontale Achse drehbaren Bearbeitungswerkzeugen und einem diese Bearbeitungswerkzeuge wenigstens teilweise umgebenden Abschirmteil bekannt, wobei die Bearbeitungswerkzeuge so antreibbar sind, dass sie sich in Fahrtrichtung durch den Boden bewegen, wobei in Fahrtrichtung hinter den Bearbeitungswerkzeugen mindestens in im Betrieb den Untergrund auflockerndes Wühlwerkzeug angebracht ist, das zwischen der von den Enden der Bearbeitungswerkzeuge beschriebenen Bahn und der von den Bearbeitungswerkzeugen entlang des Abschirmteiles von vorne nach hinten verlaufenden Bahn des Materialflusses liegt.

Die US 2003/145716 A1 betrifft ein Minenräumgerät.

Die US 198 601 A betrifft eine Dampfmaschine zur Bodenbearbeitung mit zwei Rollen mit Querklingen und zwei nachfolgende Rollen mit Umfangsklingen.

Die FR 389 023 A bezieht sich auf ein Mittel zum Pflügen des Bodens bei landwirtschaftlichen Arbeiten, um es zu ermöglichen, dass der Boden so bearbeitet wird, dass er (bis zu jeder gewünschten vorbestimmten Tiefe innerhalb der Grenzen der Praxis) zerkrümelt oder pulverisiert wird in nahezu beliebiger Feinheit, während der Untergrund (nach Wunsch) entweder gar nicht oder auch zerkrümelt oder teilweise aufgerissen oder gepflügt wird.

Aufgabe der vorliegenden Erfindung ist es, eine Bodenbearbeitung zu verbessern.

Diese Aufgabe wird durch eine Vorrichtung mit den Merkmalen des Anspruchs 1 bzw. ein Verfahren mit den Merkmalen des Anspruchs 9 gelöst. Die Unteransprüche betreffen vorteilhafte Weiterbildungen.

Nach einer Ausführung der vorliegenden Erfindung weist eine Vorrichtung, die zur Bodenbearbeitung eingereicht ist, insbesondere verwendet wird, rotierbare erste Zinken, die (im Betrieb wenigstens zeitweise rotieren und dabei) eine erste Erdschicht abtragen bzw. hierzu eingerichtet sind bzw. verwendet werden, einen Antriebsstrang, der die ersten Zinken (im Betrieb bezüglich bzw. relativ zu der Vorrichtung wenigstens zeitweise) rotiert bzw. hierzu eingerichtet ist bzw. verwendet wird, und einen, insbesondere vorrichtungsseitigen bzw. -festen, Antrieb und/oder eine Schnittstelle aufweist, durch die der Antriebsstrang mit einem Antrieb einer mit der Vorrichtung (zerstörungsfrei) lösbar gekoppelten Zugmaschine wirkverbindbar, insbesondere wirkverbunden, ist bzw. wird, bzw. die hierzu eingerichtet ist bzw. verwendet wird, und, insbesondere (bezüglich bzw. relativ zu der Vorrichtung im Betrieb) wenigstens quasistationäre, insbesondere antriebslose bzw. passive und/oder nicht um mehr als 120°, in einer Ausführung nicht um mehr als 90°, insbesondere nicht um mehr als 45°, rotierende bzw. schwenkbare, in einer Ausführung feststehende, zweite Zinken, insbesondere Grubberzinken, auf, durch die eine zweite Erdschicht, die durch Abtragen der ersten Erdschicht freigelegt wird bzw. (worden) ist, bearbeitet, insbesondere gelockert und/oder (ge- bzw. zer)krümmelt und/oder ein Schmierhorizont (auf) der zweiten Erdschicht aufgebrochen, wird bzw. die hierzu eingerichtet sind bzw. verwendet werden.

Entsprechend weist ein Verfahren nach einer Ausführung der vorliegenden Erfindung die Schritte auf:
- Verfahren der Vorrichtung auf einem zu bearbeitenden Boden, insbesondere durch eine bzw. die (zerstörungsfrei) lösbar gekoppelte Zugmaschine; und dabei
- Abtragen der ersten Erdschicht durch die rotierenden ersten Zinken; sowie
- Bearbeiten, insbesondere Lockern und/oder Krümmeln, der durch dieses Abtragen der ersten Erdschicht freigelegten zweiten Erdschicht durch die zweiten Zinken, insbesondere Aufbrechen eines Schmierhorizonts (auf) der zweiten Erdschicht.

Hierdurch kann der Boden vorteilhaft bearbeitet, insbesondere die zweite Erdschicht vorteilhaft, insbesondere mit einer vorgegebenen Arbeitstiefe, gelockert und/oder (ge- bzw. zer)krümmelt und/oder ein Schmierhorizont (auf) der zweiten Erdschicht aufgebrochen werden.

Sofern vorliegend auf eine Querrichtung (der Vorrichtung) Bezug genommen wird, ist diese in einer Ausführung parallel zu einer Rotationsachse, um die die ersten Zinken rotierbar gelagert sind bzw. im Betrieb wenigstens zeitweise rotieren, und/oder senkrecht zu einer (Ver)Fahr- und/oder Längsrichtung der Vorrichtung sowie einer Hochrichtung der Vorrichtung bzw. parallel zu einer Aufstandsfläche der Vorrichtung.

In einer Ausführung weist die Vorrichtung eine, insbesondere manuell und/oder automatisch einstellbare, Führung auf, durch die durch die ersten Zinken abgetragenes Material der ersten Erdschicht auf der durch die zweiten Zinken (noch) zu bearbeitenden und/oder (bereits) bearbeiteten zweiten Erdschicht aufgebracht wird, bzw. die hierzu eingerichtet ist bzw. verwendet wird.

Hierdurch kann in einer Ausführung vorteilhaft die erste Erdschicht wenigstens teilweise wieder die - bereits und/oder anschließend bearbeitete - zweite Erdschicht bedecken, insbesondere eine feinkrümelige(er) Ober- und eine (demgegenüber) grobschollige(re) Unterschicht und/oder ein homogener(er) Übergang zwischen Ober- und Unterschicht und damit vorteilhafterweise eine stabile(re) Struktur erzeugt und/oder Begründungspflanzen, Ernterückstände oder dergleichen wieder verfügbar gemacht werden, beispielsweise für Regenwürmer, zum Erosionsschutz oder dergleichen.

In einer Ausführung weist die Führung ein, insbesondere einstellbares, erstes Führungsmittel, mithilfe dessen durch die ersten Zinken abgetragenes, insbesondere gröberes und/oder größer(teilig)es, erstes Material der ersten Erdschicht auf der durch die zweiten Zinken (noch) zu bearbeitenden und/oder (bereits) bearbeiteten zweiten Erdschicht aufgebracht wird, bzw. das hierzu eingerichtet ist bzw. verwendet wird, und ein, insbesondere einstellbares, zweites Führungsmittel auf, mithilfe dessen durch die ersten Zinken abgetragenes, insbesondere gegenüber dem ersten Material feineres und/oder kleiner(teilig)es, zweites Material der ersten Erdschicht, insbesondere anschließend, auf diesem mithilfe dessen ersten Führungsmittels (bereits) auf der zweiten Erdschicht aufgebrachtem ersten Material aufgebracht wird, bzw. das hierzu eingerichtet ist bzw. verwendet wird.

In einer Weiterbildung weist das erste Führungsmittel eine oder mehrere, insbesondere in Querrichtung der Vorrichtung voneinander beabstandete, Abweiserzinken auf, die in einer Ausführung, insbesondere um die Querrichtung der Vorrichtung, verschwenkbar bzw. deren Winkel zur (Ver)Fahr- bzw. Längsrichtung der Vorrichtung einstellbar sind.

Hierdurch können in einer Ausführung als erstes Material der ersten Erdschicht vorteilhafterweise große bzw. größere Elemente wie insbesondere (Mais)Stroh, Wurzelwerk oder dergleichen aus- bzw. abgesondert werden.

Zusätzlich weist in einer Ausführung das zweite Führungsmittel ein oder mehrere, in Querrichtung der Vorrichtung voneinander beabstandete und/oder einstellbare, Leitbleche auf.

In einer Weiterbildung sind das erste und zweite Führungsmittel, insbesondere mechanisch, in einer Ausführung mittels eines oder mehrerer Hebel, gekoppelt bzw. miteinander verstellbar.

Zusätzlich oder alternativ wird/werden in einer Ausführung das erste und/oder zweite Führungsmittel, insbesondere die Leitbleche und/oder die, in einer Ausführung damit gekoppelten, Abweiserzinken, automatisch in Abhängigkeit von der Hanglage bzw. Neigung der Vorrichtung, insbesondere ihrer Querrichtung und/oder Rotationsachse, gegen die Schwerkraftrichtung, einstellt bzw. weist die Vorrichtung eine entsprechende automatisierte (Ver)Stellvorrichtung auf.

Hierdurch kann in einer Ausführung das erste bzw. zweite Material der ersten Erdschicht vorteilhafter verteilt, insbesondere eine schwerkraftbedingte talabwärtige Ansammlung von erstem bzw. zweitem Material wenigstens teilweise kompensiert bzw. erstes bzw. zweites Material gezielt talaufwärts geführt und so homogen(er) verteilt werden. Durch die Kopplung können in einer Ausführung Engstellen zwischen dem ersten und zweiten Führungsmittel infolge einer Verstellung nur des ersten bzw. nur des zweiten Führungsmittels reduziert, vorzugsweise vermieden werden.

Entsprechend weist das Verfahren in einer Ausführung die Schritte auf:
- Aufbringen von durch die rotierenden Zinken abgetragenem ersten Material der ersten Erdschicht auf der durch die zweiten Zinken zu bearbeitenden und/oder bearbeiteten zweiten Erdschicht mithilfe des ersten Führungsmittels; und
- Aufbringen von durch die rotierenden Zinken abgetragenem zweiten Material der ersten Erdschicht auf diesem auf der zweiten Erdschicht aufgebrachtem ersten Material mithilfe des zweiten Führungsmittels.

Hierdurch kann in einer Ausführung die erste Erdschicht ihrerseits aufgeteilt, insbesondere das erste Material der ersten Erdschicht, insbesondere große bzw. größere Elemente wie insbesondere (Mais)Stroh, Wurzelwerk oder dergleichen, in einer mittleren Schicht zwischen der (durch Bearbeiten der zweiten Erdschicht durch die zweite Zinken) erzeugten Unterschicht und der (durch das zweite Material der ersten Erdschicht) erzeugte bzw. gebildete Oberschicht angeordnet, insbesondere eingearbeitet, und dadurch vorteilhafterweise die Verbindung zwischen Ober- und Unterschicht bzw. die Struktur und/oder die Unterlage der Oberschicht verbessert werden.

Durch ein Aufbringen der durch die rotierenden Zinken abgetragenem ersten Erdschicht bzw. des ersten Materials der ersten Erdschicht auf der durch die zweiten Zinken bereits bearbeiteten zweiten Erdschicht bzw. nach Bearbeiten der zweiten Erdschicht durch die zweiten Zinken kann in einer Ausführung vorteilhaft die Bearbeitung der zweiten Erdschicht ungestört erfolgen und/oder eine Einarbeitung der abgetragenen ersten Erdschicht bzw. ihres ersten Materials beim Bearbeiten der zweiten Erdschicht durch die zweiten Zinken vermieden werden.

In einer Ausführung weist die Vorrichtung eine Nachlaufwalze auf, durch die durch die rotierenden Zinken abgetragenes, insbesondere erstens und/oder zweites, Material der ersten Erdschicht auf der durch die zweiten Zinken bearbeiteten zweiten Erdschicht (wieder) angedrückt wird bzw. die hierzu eingerichtet ist bzw. verwendet wird.

Hierdurch kann in einer Ausführung die Verbindung zwischen Ober- und Unterschicht bzw. die Struktur und/oder die Unterlage der Oberschicht verbessert werden.

Zusätzlich oder alternativ weist in einer Ausführung die Vorrichtung eine Vorlaufwalze auf, durch die die erste Erdschicht vor dem Abtragen durch die rotierenden Zinken angedrückt wird bzw. die hierzu eingerichtet ist bzw. verwendet wird.

Hierdurch können in einer Ausführung Begrünungspflanzen oder dergleichen angedrückt, insbesondere niedergehalten, und/oder, insbesondere dadurch, vorteilhafterweise eine Zerkleinerung der ersten Erdschicht, insbesondere von diesen Begrünungspflanzen, Ernterückständen oder dergleichen, verbessert werden.

In einer Ausführung wird eine Höhe der ersten Zinken, der zweiten Zinken, der Vor- und/oder der Nachlaufwalze gegenüber einer Basis der Vorrichtung, an der diese verstellbar befestigt sind, vor und/oder während dem Verfahren der Vorrichtung auf einem zu bearbeitenden Boden bzw. Bearbeitung des Bodens mit der bzw. durch die Vorrichtung einstellt, insbesondere manuell und/oder motorisch, insbesondere automatisch, bzw. ist die Vorrichtung hierzu eingerichtet.

Zusätzlich oder alternativ wird in einer Ausführung die Führung, insbesondere das erste und/oder das zweite Führungsmittel, vor und/oder während dem Verfahren der Vorrichtung auf einem zu bearbeitenden Boden bzw. Bearbeitung des Bodens mit der bzw. durch die Vorrichtung einstellt, insbesondere manuell und/oder motorisch, insbesondere automatisch, bzw. ist die Vorrichtung hierzu eingerichtet. einstellt.

Hierdurch können in einer Ausführung die Vorrichtung an unterschiedliche Einsatzbedingungen angepasst und/oder unterschiedliche Arbeitstiefen, insbesondere Schichtdicken, realisiert und so die Bodenbearbeitung verbessert werden.

In einer Ausführung sind in Querrichtung der Vorrichtung aufeinanderfolgende bzw. einander benachbarte bzw. nächst(liegend)e der ersten Zinken oder in Querrichtung der Vorrichtung aufeinanderfolgende bzw. einander benachbarte bzw. nächst(liegend)e Gruppen der ersten Zinken, die in einer Ausführung jeweils wenigstens zwei und/oder höchstens vier der ersten Zinken, insbesondere genau zwei der ersten Zinken, aufweisen, (jeweils) in oder entgegen der Rotationsrichtung, insbesondere um wenigstens 15° und/oder höchstens 90°, gegeneinander versetzt.

Zusätzlich oder alternativ sind in einer Ausführung in Rotationsrichtung der Zinken aufeinanderfolgende bzw. einander benachbarte bzw. nächst(liegend)e der ersten Zinken oder in Rotationsrichtung der Zinken aufeinanderfolgende bzw. einander benachbarte bzw. nächst(liegend)e Gruppen der ersten Zinken, die in einer Ausführung jeweils wenigstens zwei und/oder höchstens vier der ersten Zinken, insbesondere genau zwei der ersten Zinken, aufweisen, in Querrichtung der Vorrichtung, insbesondere um wenigstens 1 cm und/oder höchstens 10 cm, (jeweils) gegeneinander versetzt und/oder in Rotationsrichtung äquidistant verteilt und/oder (jeweils) um wenigstens 45° und/oder höchstens 180°, insbesondere höchstens 135°, gegeneinander versetzt.

In einer Ausführung sind die ersten Zinken bzw. Gruppen von ersten Zinken derart angeordnet, dass bei Rotation in Rotationsrichtung zyklisch (jeweils) zunächst in Querrichtung äußere, insbesondere äußerste, erste Zinken bzw. Gruppen von ersten Zinken, anschließend in Querrichtung innere, insbesondere innerste bzw. mittlere, insbesondere zentrale, erste Zinken bzw. Gruppen von ersten Zinken, und anschließend weitere erste Zinken bzw. Gruppen von ersten Zinken in die erste Erdschicht eingreifen bzw. diese bearbeiten, die in Querrichtung zwischen diesen äußer(st)en und inner(sten) ersten Zinken bzw. Gruppen von ersten Zinken angeordnet sind, bevor anschließend wiederum weitere äußer(st)e ersten Zinken bzw. Gruppen von ersten Zinken in die erste Erdschicht eingreifen bzw. diese bearbeiten.

Hierdurch kann in einer Ausführung ein Materialfluss der ersten Erdschicht verbessert werden.

Zusätzlich oder alternativ sind die ersten Zinken in einer Ausführung (zerstörungsfrei) lösbar, insbesondere durch Verschrauben, Einstecken oder dergleichen, und/oder (jeweils) mit einer Rundung, insbesondere einem Radius, an einem durch den Antriebsstrang rotierbaren Rotor befestigt.

Durch eine solche lösbare Befestigung können die Zinken in einer Ausführung bei Bedarf, insbesondere Verschleiß oder für eine andere Bearbeitung und/oder Bodenbeschaffenheit, einfach(er) ausgetauscht werden.

Durch eine Rundung kann in einer Ausführung ein Abschieben von Material von den Zinken verbessert werden.

In einer Ausführung rotieren die ersten Zinken (im Betrieb) mit einer Drehzahl von wenigstens 50 Umdrehungen pro Minute [U/min], insbesondere wenigstens 100 U/min, und/oder höchstens 400 U/min, insbesondere höchstens 250 U/min, und/oder schleudern die abgetragene erste Erdschicht, insbesondere deren erstes und/oder zweites Material, wenigstens teilweise in die Führung, insbesondere gegen eine, insbesondere wenigstens abschnittsweise gekrümmte, Führungswand der Führung, insbesondere ein Führungsblech der Führung, bzw. ist die Vorrichtung, insbesondere deren erste Zinken, deren Antrieb und/oder der Antriebsstrang, und/oder die Führung bzw. deren Führungswand bzw. Führungsblech hierzu eingerichtet, insbesondere entsprechend (zueinander) angeordnet bzw. ausgerichtet.

Hierdurch kann in einer Ausführung eine Erdstruktur geschont und/oder die Vereinzelung in erstes und zweites Material verbessert werden.

In einer Ausführung weist die Vorrichtung ein, insbesondere elastisches und/oder drehbar gelagertes, insbesondere (elastisch gegen eine Verdrehung) vorgespannt drehbar gelagertes, Steinabweisermittel, insbesondere ein Steinabweiserblech und/oder mit einem Keilwinkel, auf, das Steine und dergleichen von den ersten Zinken abweist bzw. -drängt bzw. hierzu eingerichtet, insbesondere relativ zu den ersten Zinken angeordnet, ist bzw. verwendet wird.

Durch ein Steinabweisermittel kann in einer Ausführung die Vorrichtung, insbesondere ihre Führung, vor Beschädigungen (besser) geschützt werden, durch ein elastisches bzw. (vorgespannt) drehbar gelagertes, insbesondere federgestütztes, Steinabweisermittel dieses bei einem Verklemmen von Steinen und dergleichen zwischen Steinabweisermittel und ersten Zinken nötigenfalls ausweichen.

In einer Ausführung sind die zweiten Zinken, in einer Ausführung gruppenweise, insbesondere gemeinsam, oder einzeln, drehbar gelagert, in einer Weiterbildung an einem ein- oder mehrteiligen Querträger. Hierdurch können die zweiten Zinken beim Auftreffen auf massive(re) Hindernisse wie Findlinge oder dergleichen, insbesondere gegensinnig zu einer Verfahrrichtung der Vorrichtung, drehend ausweichen.

In einer Weiterbildung rotiert der Querträger, insbesondere aktiv bzw. durch einen Querträgerantrieb, im Betrieb (bezüglich bzw. relativ zu der Vorrichtung und/oder den zweiten Zinken) wenigstens zeitweise bzw. ist der Querträger(antrieb) hierzu eingerichtet. Zusätzlich oder alternativ weist der Querträger in einer Ausführung eine oder mehrere Vorsprünge, insbesondere quer zur Querrichtung der Vorrichtung, auf. Hierdurch kann ein Materialstau vor dem Querträger reduziert, insbesondere aufgelöst bzw. vermieden werden.

Zusätzlich oder alternativ sind in einer Ausführung die zweiten Zinken, in einer Ausführung gruppenweise, insbesondere gemeinsam, oder einzeln, vorgespannt, insbesondere in eine Arbeitsstellung, relativ zur Vorrichtung und/oder pneumatisch, magnetisch und/oder mechanisch, in einer Ausführung durch eine oder mehrere Federn. In einer Weiterbildung stützt sich ein entsprechendes ein- oder mehrteiliges Vorspannmittel, das die drehbar gelagerten zweiten Zinken, insbesondere in die Arbeitsstellung, vorspannt, hierzu an einem statischen Bauteil, insbesondere Gehäuse, oder einem damit verbundenen Hebel der Vorrichtung ab bzw. spannt die zweiten Zinken relativ zu bzw. gegenüber dem statischen Bauteil bzw. Gehäuse vor bzw. ist hierzu eingerichtet. Mit anderen Worten können die zweiten Zinken in einer Ausführung (relativ zur Vorrichtung) feststehen oder passiv und/oder begrenzt gegen eine Vorspannung verschwenk(t werd)en, insbesondere gegensinnig zu einer Verfahrrichtung der Vorrichtung bzw. gegensinnig zu einer Rotationsrichtung der ersten Zinken.

Weitere Vorteile und Merkmale ergeben sich aus den Unteransprüchen und den Ausführungsbeispielen. Hierzu zeigt, teilweise schematisiert,:
- Fig. 1:: eine Vorrichtung bei einer Bodenbearbeitung nach einer Ausführung der vorliegenden Erfindung in einer Seitansicht bei abgenommener Seitenverkleidung;
- Fig. 2:: eine perspektivische Ansicht von unten auf diese Vorrichtung;
- Fig. 3:: eine Vorrichtung bei einer Bodenbearbeitung nach einer weiteren Ausführung der vorliegenden Erfindung in Fig. 1 entsprechender Darstellung; und
- Fig. 4:: eine perspektivische Ansicht von unten auf diese Vorrichtung.

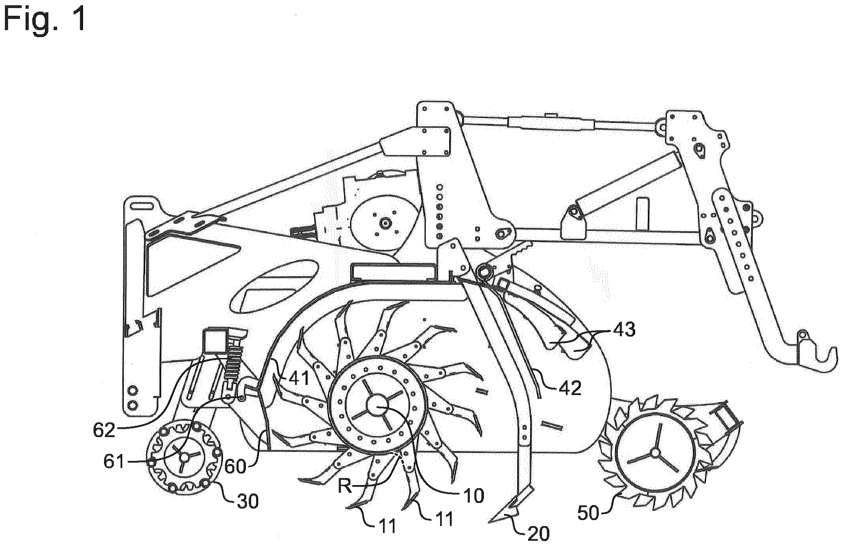

Fig. 1 zeigt eine Vorrichtung bei einer Bodenbearbeitung nach einer Ausführung der vorliegenden Erfindung in einer Seitansicht bei abgenommener Seitenverkleidung.

Die Vorrichtung wird zur Bodenbearbeitung durch eine Zugmaschine in einer Verfahrrichtung (horizontal von rechts nach links in Fig. 1) auf einem zu bearbeitenden Boden verfahren, wobei ein vorrichtungs- oder zugmaschinenseitiger Antrieb über einen Antriebsstrang einen Rotor 10 mit rotierbaren ersten Zinken 11 um eine Rotationsachse bzw. Querrichtung der Vorrichtung (senkrecht auf der Bildebene der Fig. 1) rotiert (nicht dargestellt).

Eine Vorlaufwalze 30 drückt zunächst eine oberste erste Erdschicht mit Begrünungspflanzen, Ernterückstände oder dergleichen an.

Anschließend tragen die rotierenden ersten Zinken 11 diese erste Erdschicht ab und schleudern sie gegen ein Führungsblech 41 einer Führung.

Anschließend wird eine durch dieses Abtragen der ersten Erdschicht freigelegte zweite Erdschicht durch stationäre zweite bzw. Grubberzinken 20 bearbeitet, insbesondere deren Schmierhorizont aufgebrochen.

Das Führungsblech 41 führt die durch die rotierenden ersten Zinken 11 abgetragene erste Erdschicht gegen ein erstes Führungsmittel in Form von Abweiserzinken 42, deren Winkel um die Querrichtung der Vorrichtung (d.h. in der Bildebene der Fig. 1) einstellbar ist.

Die Abweiserzinken 42 sortieren gröberes erstes Material der ersten Erdschicht, beispielsweise (Mais)Stroh, Wurzelwerk oder dergleichen, aus und bringen dies auf der durch dieses Abtragen der ersten Erdschicht freigelegten und durch die stationären zweiten bzw. Grubberzinken 20 bearbeiteten zweiten Erdschicht auf.

Nicht aussortiertes feineres zweites Material der ersten Erdschicht wird vom Führungsblech 41 gegen Leitbleche 43 geführt, die in einer Ausführung manuell oder automatisch in Abhängigkeit von einer Neigung (der Querrichtung) der Vorrichtung gegen eine Schwerkraftrichtung in Querrichtung der Vorrichtung (d.h. in die Bildebene der Fig. 1 hinein bzw. aus dieser heraus) verschwenkt werden und so insbesondere eine schwerkraftbedingte talseitige Materialanhäufung wenigstens teilweise kompensieren bzw. auflösen können.

Diese Leitbleche 43 verteilen dieses zweites Material auf dem auf der bearbeiteten zweiten Erdschicht aufgebrachten ersten Material.

Eine Nachlaufwalze 50 drückt schließlich dieses durch die rotierenden ersten Zinken 11 abgetragene erste und darüber angeordnete zweite Material der ersten Erdschicht auf der durch die stationären zweiten bzw. Grubberzinken 20 bearbeiteten zweiten Erdschicht wieder an.

Ein Steinabweisermittel in Form eines Steinabweiserbleches 60, das mit einem Keilwinkel in einem Drehlager 61 schwenkbar gelagert und durch Federn 62 elastisch vorgespannt bzw. gestützt ist, drängt gegebenenfalls von den rotierenden ersten Zinken 11 mitgeführte Steine ab und weicht bei einem Verklemmen unter elastischem Spannen der Federn 62 aus.

In einer Abwandlung sind die ersten Zinken 11 mit einer Rundung R an dem Rotor 10 befestigt, wie in Fig. 1 für einen Zinken 11 fett und gestrichelt angedeutet.

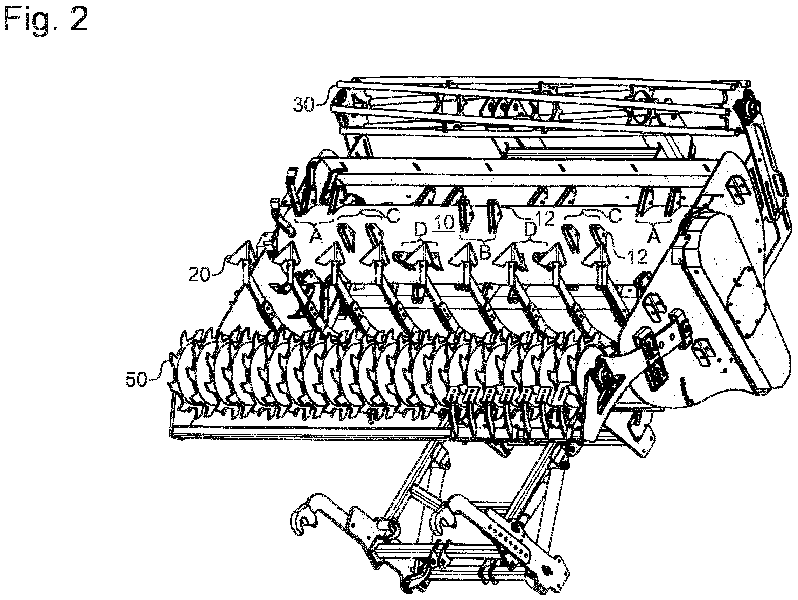

In der perspektivische Ansicht der Fig. 2 von unten auf die Vorrichtung der Fig. 1, in der die lösbaren ersten Zinken 11 sowie das Steinabweisermittel 60 entfernt sind, erkennt man anhand der Befestigungszapfen 12 zum Anschrauben oder Einstecken der ersten Zinken 11, dass in Querrichtung äußerste Paare A erster Zinken 11, von denen jeweils drei äquidistant über den Umfang des Rotors 10 bzw. in Rotationsrichtung der ersten Zinken 11 verteilt sind, gegen in Querrichtung benachbarte zweitäußere Paare C erster Zinken 11, von denen ebenfalls jeweils drei äquidistant über den Umfang des Rotors 10 bzw. in Rotationsrichtung der ersten Zinken 11 verteilt sind, um 60° in Rotationsrichtung der ersten Zinken 11, diese gegen in Querrichtung benachbarte, zweitinnere Paare D erster Zinken 11, von denen wiederum jeweils drei äquidistant über den Umfang des Rotors 10 bzw. in Rotationsrichtung der ersten Zinken 11 verteilt sind, um 30° in Rotationsrichtung der ersten Zinken 11 und diese wiederum jeweils gegen ein in Querrichtung benachbartes innerstes bzw. mittleres bzw. zentrales Paar B erster Zinken 11, von denen ebenfalls drei äquidistant über den Umfang des Rotors 10 bzw. in Rotationsrichtung der ersten Zinken 11 verteilt sind, um 60° entgegen der Rotationsrichtung versetzt sind. Man erkennt zudem, dass jeweils in Rotationsrichtung benachbarte (äußerste, zweitäußere, zweitinnere bzw. innerste) Paare erster Zinken 11 (jeweils) gegeneinander um ca. 5 cm versetzt sind.

Die Paare von ersten Zinken 11 sind somit derart angeordnet, dass bei Rotation in Rotationsrichtung zyklisch (jeweils) zunächst äußerste Paare A von ersten Zinken 11, dann ein innerstes bzw. mittleres Paar B von ersten Zinken 11, anschließend die zweitäußeren Paare C von ersten Zinken 11 und zuletzt die zweitinneren Paare D von ersten Zinken 11 in die erste Erdschicht eingreifen bzw. diese bearbeiten.

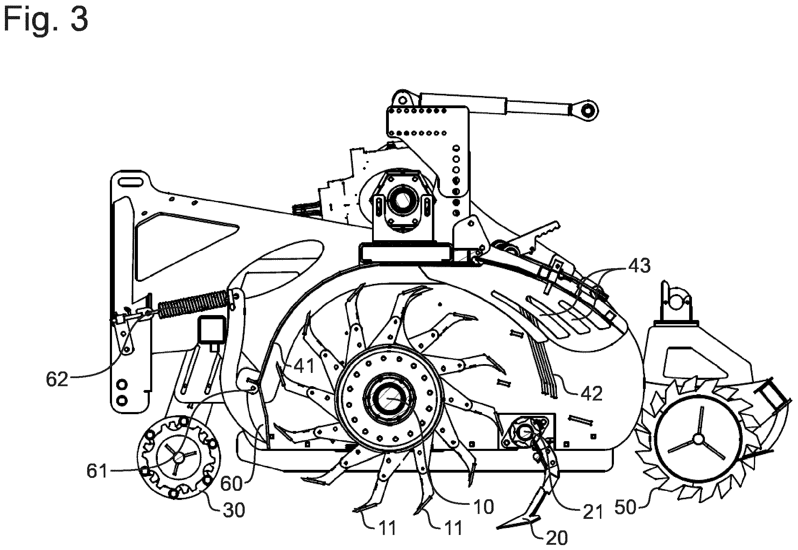

Fig. 3 zeigt eine Vorrichtung bei einer Bodenbearbeitung nach einer weiteren Ausführung der vorliegenden Erfindung in Fig. 1 entsprechender Darstellung. Einander entsprechende Merkmale sind durch gleiche Bezugszeichen identifziert, so dass auf die vorstehende Beschreibung Bezug genommen und nachfolgend nur auf Unterschiede eingegangen wird.

In der Ausführung der Fig. 3 sind zum einen die Leitbleche 43 zum Rotor 10 hin verlängert, so dass sie die Abweiserzinken 42 übergreifen. Zudem sind die

Abweiserzinken 42 mit den Leitblechen 43 gekoppelt, so dass beide gemeinsam verstellt und so Engstellen (möglichst) vermieden werden.

Zum anderen sind in der Ausführung der Fig. 3 die zweiten bzw. Grubberzinken 20 quasi-stationär bzw. passiv bzw. antriebslos drehbar auf einem Querträger 21 gelagert, der seinerseits durch einen Ölmotor rotierbar ist bzw. rotiert wird.

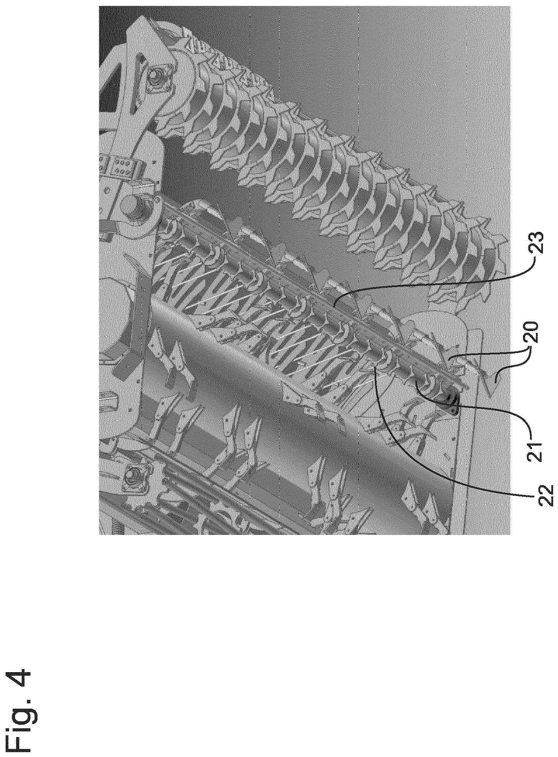

In der perspektivische Ansicht der Fig. 4 von unten auf die Vorrichtung der Fig. 3 ist erkennbar, dass der Querträger 21 mehrere Vorsprünge 22 quer zur Querrichtung aufweist, durch die in Kombination mit seiner Rotation Materialstau vermieden bzw. aufgelöst werden kann.

Die drehbar auf dem Querträger 21 gelagerten Grubberzinken 20 sind durch eine Stange 23 miteinander gekoppelt und über diese in eine in Fig. 3, 4 gezeigte Arbeitstellung vorgespannt. Hierzu sind eine oder mehrere (in Fig. 4 nicht sichtbare) Federn zwischen der Stange 23 und einer Seitenwand der Vorrichtung verspannt. Dadurch können die Grubberzinken 20 gegensinnig zur Rotationsrichtung des Rotors 10 größeren Hindernissen ausweichen bzw. diese überfahren.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Vorrichtung zur Bodenbearbeitung, die rotierbare erste Zinken (11) zum Abtragen einer ersten Erdschicht, einen Antriebsstrang zum Rotieren der ersten Zinken mit einem Antrieb oder einer Schnittstelle zur Wirkverbindung mit einem Antrieb einer mit der Vorrichtung lösbar gekoppelten Zugmaschine, zweite Zinken (20) zum Bearbeiten einer durch Abtragen der ersten Erdschicht freigelegten zweiten Erdschicht und eine Führung (41-43) zum Aufbringen von durch die ersten Zinken abgetragenem Material der ersten Erdschicht auf der durch die zweiten Zinken zu bearbeitenden und/oder bearbeiteten zweiten Erdschicht aufweist, wobei die Führung ein erstes Führungsmittel (42) zum Aufbringen von durch die ersten Zinken abgetragenem ersten Material der ersten Erdschicht auf der durch die zweiten Zinken zu bearbeitenden und/oder bearbeiteten zweiten Erdschicht und ein einstellbares zweites Führungsmittel zum Aufbringen von durch die ersten Zinken abgetragenem zweiten Material der ersten Erdschicht auf diesem auf der zweiten Erdschicht aufgebrachtem ersten Material aufweist, **dadurch gekennzeichnet, dass** das zweite Führungsmittel ein oder mehrere Leitbleche (43) aufweist, die in Querrichtung verschwenkbar sind.

2. Vorrichtung nach dem vorhergehenden Anspruch, **dadurch gekennzeichnet, dass** das zweite Führungsmittel mit dem ersten Führungsmittel gekoppelt ist und/oder dass das erste Führungsmittel ein einstellbares erste Führungsmittel ist.

3. Vorrichtung nach einem der vorhergehenden Ansprüche, **gekennzeichnet durch** eine Nachlaufwalze (50) zum Andrücken von durch die ersten Zinken abgetragenem Material der ersten Erdschicht auf der durch die zweiten Zinken bearbeiteten zweiten Erdschicht.

4. Vorrichtung nach einem der vorhergehenden Ansprüche, **gekennzeichnet durch** eine Vorlaufwalze (30) zum Andrücken der ersten Erdschicht vor dem Abtragen durch die ersten Zinken.

5. Vorrichtung nach einem der vorhergehenden Ansprüche, **dadurch gekennzeichnet, dass** eine Höhe der ersten Zinken, der zweiten Zinken, der Vor- und/oder der Nachlaufwalze gegenüber einer Basis der Vorrichtung, an der diese einstellbar befestigt sind, einstellbar ist.

6. Vorrichtung nach einem der vorhergehenden Ansprüche, **dadurch gekennzeichnet, dass** in Querrichtung aufeinanderfolgende der ersten Zinken oder Gruppen (A, B, C, D) der ersten Zinken (11) in oder entgegen der Rotationsrichtung gegeneinander versetzt und/oder in Rotationsrichtung aufeinanderfolgende der ersten Zinken oder Gruppen (A, B, C, D) der ersten Zinken in Querrichtung gegeneinander versetzt und/oder die ersten Zinken lösbar und/oder mit einer Rundung (R) an einem Rotor befestigt sind.

7. Vorrichtung nach einem der vorhergehenden Ansprüche, **gekennzeichnet durch** ein, insbesondere elastisches und/oder, insbesondere vorgespannt (62), drehbar gelagertes (61), Steinabweisermittel (60) zum Abweisen von Steinen von den ersten Zinken.

8. Vorrichtung nach einem der vorhergehenden Ansprüche, **dadurch gekennzeichnet, dass** die zweiten Zinken (20), insbesondere vorgespannt und/oder an einem, insbesondere rotierbaren, Querträger (21), drehbar gelagert sind.

9. Verfahren zur Bodenbearbeitung mittels einer Vorrichtung nach einem der vorhergehenden Ansprüche, mit den Schritten:
- Verfahren der Vorrichtung auf einem zu bearbeitenden Boden; und dabei
- Abtragen der ersten Erdschicht durch die rotierenden ersten Zinken (11); sowie
- Bearbeiten der durch dieses Abtragen der ersten Erdschicht freigelegten zweiten Erdschicht durch die zweiten Zinken (20).

10. Verfahren nach dem vorhergehenden Anspruch, **gekennzeichnet durch** den Schritt:
- Aufbringen von durch die rotierenden Zinken abgetragenem Material der ersten Erdschicht auf der durch die zweiten Zinken zu bearbeitenden und/oder bearbeiteten zweiten Erdschicht durch die Führung (41-43),
insbesondere durch die Schritte:
- Aufbringen von durch die rotierenden Zinken abgetragenem ersten Material der ersten Erdschicht auf der durch die zweiten Zinken zu bearbeitenden und/oder bearbeiteten zweiten Erdschicht mithilfe des ersten Führungsmittels (42); und
- Aufbringen von durch die rotierenden Zinken abgetragenem zweiten Material der ersten Erdschicht auf diesem auf der zweiten Erdschicht aufgebrachtem ersten Material mithilfe des zweiten Führungsmittels (43).

11. Verfahren nach einem der vorhergehenden Ansprüche 9-10, **gekennzeichnet durch gekennzeichnet durch** wenigstens einen der Schritte:
- Andrücken von durch die rotierenden Zinken abgetragenem Material der ersten Erdschicht auf der durch die zweiten Zinken bearbeiteten zweiten Erdschicht durch die Nachlaufwalze (50); und/oder
- Andrücken der ersten Erdschicht vor dem Abtragen durch die rotierenden Zinken durch die Vorlaufwalze (30).

12. Verfahren nach einem der vorhergehenden Ansprüche 9-11, **gekennzeichnet durch** den Schritt:
- Einstellen der Höhe der ersten Zinken, der zweiten Zinken, der Vor- und/oder der Nachlaufwalze gegenüber einer Basis der Vorrichtung und/oder Einstellen der Führung, insbesondere des ersten und/oder zweiten Führungsmittels, vor und/oder während dem Verfahren der Vorrichtung auf einem zu bearbeitenden Boden.

## Claims

1. A device for tilling soil, which device comprises a first set of rotatable tines (11) for removing a first layer of soil, a drive train for rotating the first set of tines, the drive train comprising a drive or an interface for operative connection to a drive of a towing vehicle which is detachably coupled to the device for tilling soil, a second set of tines (20) for tilling a second layer of soil which has been exposed by removing the first layer of soil, and a guide (41-43) for applying, on top of the second layer of soil which is to be tilled and / or which has been tilled by the second set of tines, material of the first layer of soil which has been removed by the first set of tines, wherein the guide comprises a first guide means (42) for applying, on top of the second layer of soil which is to be tilled and / or which has been tilled by the second set of tines, a first material of the first layer of soil which has been removed by the first set of tines, and an adjustable second guide means for applying, on top of said first material which has been applied on top of the second layer of soil, a second material of the first layer of soil which has been removed by the first set of tines, **characterised in that** the second guide means comprises one or more guide plates (43) which can be pivoted in the transverse direction.

2. The device according to the preceding claim, **characterised in that** the second guide means is coupled to the first guide means and / or **in that** the first guide means is an adjustable first guide means.

3. The device according to any one of the preceding claims, **characterised by** a follower roller (50) for pressing material of the first layer of soil which has been removed by the first set of tines, onto the second layer of soil which has been tilled by the second set of tines.

4. The device according to any one of the preceding claims, **characterised by** a leading roller (30) for pressing down the first layer of soil before it is removed by the first set of tines.

5. The device according to any one of the preceding claims, **characterised in that** a height of the first set of tines, a height of the second set of tines, a height of the leading roller and / or a height of the follower roller can be adjusted with respect to a base of the device which these are adjustably attached to.

6. The device according to any one of the preceding claims, **characterised in that** tines of the first set of tines or groups (A, B, C, D) of the tines of the first set of tines (11) which are successive to one another in the transverse direction are offset from one another in the direction of rotation or against the direction of rotation and / or **characterised in that** tines of the first set of tines or groups (A, B, C, D) of the tines of the first set of tines which are successive to one another in the direction of rotation are offset from one another in the transverse direction and / or **characterised in that** the tines of the first set of tines are fastened to a rotor in a detachable manner and / or via a rounded portion (R).

7. The device according to any one of the preceding claims, **characterised by** a stone deflection means (60), in particular an elastic stone deflection means (60) and / or a rotatably mounted (61) stone deflection means (60), in particular a stone deflection means (60) which is rotatably mounted (61) in a biased (62) manner, for deflecting stones from the first set of tines.

8. The device according to any one of the preceding claims, **characterised in that** the second set of tines (20) are rotatably mounted, in particular that they are rotatably mounted in a biased manner, and / or that they are rotatably mounted on a cross member (21), in particular on a rotatable cross member (21).

9. A method of tilling soil by means of a device according to any one of the preceding claims, wherein the method comprises the steps of:
- moving the device on a ground to be worked on; and, in the course of this
- removing the first layer of soil by the first set of rotating tines (11); as well as
- tilling the second layer of soil by means of the second set of tines (20), which second layer of soil has been exposed as a result of the removal of the first layer of soil.

10. The method according to the preceding claim, **characterised by** the step of:
- applying, by means of the guide (41-43), on top of the second layer of soil which is to be tilled and / or which has been tilled by the second set of tines, material of the first layer of soil which has been removed by the rotating tines,
in particular **characterised by** the steps of:
- applying, with the aid of the first guide means (42), on top of the second layer of soil which is to be tilled and / or which has been tilled by the second set of tines, the first material of the first layer of soil which has been removed by the rotating tines; and
- applying, with the aid of the second guide means (43), on top of said first material which has been applied on top of the second layer of soil, the second material of the first layer of soil which has been removed by the rotating tines.

11. The method according to any one of the preceding claims 9-10, **characterised by characterised by** at least one of the following steps:
- pressing, by the follower roller (50), material of the first layer of soil which has been removed by the rotating tines, onto the second layer of soil which has been tilled by the second set of tines; and / or
- pressing down, by the leading roller (30), the first layer of soil before it is removed by the rotating tines.

12. The method according to any one of the preceding claims 9-11, **characterised by** the step of:
- adjusting the height of the first set of tines, the height of the second set of tines, the height of the leading roller and / or the height of the follower roller, with respect to a base of the device and / or adjusting the guide, in particular the first guide means and / or the second guide means, before and / or during the moving of the device on a ground to be worked on.

## Revendications

1. Dispositif pour le travail du sol, qui présente des premières dents (11) rotatives pour l'enlèvement d'une première couche de terre, une chaîne cinématique pour la rotation des premières dents avec un entraînement ou une interface pour la liaison fonctionnelle avec un entraînement d'un tracteur accouplé au dispositif de manière détachable, des deuxièmes dents (20) pour le travail d'une deuxième couche de terre mise à nu par enlèvement de la première couche de terre et un guidage (41-43) pour l'application d'une matière de la première couche de terre enlevée par les premières dents sur la deuxième couche de terre à travailler et/ou travaillée par les deuxièmes dents, dans lequel le guidage présente un premier moyen de guidage (42) pour l'application d'une première matière de la première couche de terre enlevée par les premières dents sur la deuxième couche de terre à travailler et/ou travaillée par les deuxièmes dents et un deuxième moyen de guidage réglable pour l'application d'une deuxième matière de la première couche de terre enlevée par les premières dents sur cette première matière appliquée sur la deuxième couche de terre, **caractérisé en ce que** le deuxième moyen de guidage présente une ou plusieurs tôles de guidage (43), qui peuvent pivoter dans la direction transversale.

2. Dispositif selon la revendication précédente, **caractérisé en ce que** le deuxième moyen de guidage est accouplé au premier moyen de guidage et/ou que le premier moyen de guidage est un premier moyen de guidage réglable.

3. Dispositif selon l'une quelconque des revendications précédentes, **caractérisé par** un rouleau arrière (50) pour presser une matière de la première couche de terre enlevée par les premières dents sur la deuxième couche de terre travaillée par les deuxièmes dents.

4. Dispositif selon l'une quelconque des revendications précédentes, **caractérisé par** un rouleau avant (30) pour presser la première couche de terre avant l'enlèvement par les premières dents.

5. Dispositif selon l'une quelconque des revendications précédentes, **caractérisé en ce qu'**une hauteur des premières dents, des deuxièmes dents, du rouleau avant et/ou du rouleau arrière par rapport à une base du dispositif, sur laquelle ceux-ci sont fixés de manière réglable, est réglable.

6. Dispositif selon l'une quelconque des revendications précédentes, **caractérisé en ce que** les dents se succédant dans la direction transversale des premières dents ou groupes (A, B, C, D) des premières dents (11) sont décalées les unes des autres dans ou à l'encontre de la direction de rotation et/ou les dents se succédant dans la direction de rotation des premières dents ou groupes (A, B, C, D) des premières dents sont décalées les unes des autres dans la direction transversale et/ou les premières dents sont fixées sur un rotor de manière détachable et/ou avec un arrondi (R).

7. Dispositif selon l'une quelconque des revendications précédentes, **caractérisé par** un moyen formant chasse-pierre (60), en particulier élastique et/ou monté en rotation (61), en particulier de manière précontrainte (62), pour chasser des pierres des premières dents.

8. Dispositif selon l'une quelconque des revendications précédentes, **caractérisé en ce que** les deuxièmes dents (20) sont montées en rotation, en particulier de manière précontrainte et/ou sur une traverse (21), en particulier rotative.

9. Procédé pour le travail du sol au moyen d'un dispositif selon l'une quelconque des revendications précédentes, avec les étapes :
- de déplacement du dispositif sur un sol à travailler ; et ainsi
- d'enlèvement de la première couche de terre par les premières dents rotatives (11) ; ainsi que
- de travail de la deuxième couche de terre mise à nu par cet enlèvement de la première couche de terre par les deuxièmes dents (20).

10. Procédé selon la revendication précédente, **caractérisé par** l'étape :
- d'application d'une matière de la première couche de terre enlevée par les dents rotatives sur la deuxième couche de terre à travailler et/ou travaillée par les deuxièmes dents par le guidage (41-43), en particulier par les étapes :
- d'application d'une première matière de la première couche de terre enlevée par les dents rotatives sur la deuxième couche de terre à travailler et/ou travaillée par les deuxièmes dents à l'aide du premier moyen de guidage (42) ; et
- d'application d'une deuxième matière de la première couche de terre enlevée par les dents rotatives sur cette première matière appliquée sur la deuxième couche de terre à l'aide du deuxième moyen de guidage (43).

11. Procédé selon l'une quelconque des revendications précédentes 9-10, **caractérisé par** au moins une des étapes :
- de pression d'une matière de la première couche de terre enlevée par les dents rotatives sur la deuxième couche de terre travaillée par les deuxièmes dents par le rouleau arrière (50) ; et/ou
- de pression de la première couche de terre avant l'enlèvement par les dents rotatives par le rouleau avant (30) .

12. Procédé selon l'une quelconque des revendications précédentes 9-11, **caractérisé par** l'étape :
- de réglage de la hauteur des premières dents, des deuxièmes dents, du rouleau avant et/ou du rouleau arrière par rapport à une base du dispositif et/ou de réglage du guidage, en particulier du premier et/ou deuxième moyen de guidage, avant et/ou pendant le déplacement du dispositif sur un sol à travailler.
